# EUROPÄISCHE PATENTSCHRIFT

(11) **EP 3 615 355 B1**
(45) Veröffentlichungstag und Bekanntmachung des Hinweises auf die Patenterteilung: **24.02.2021**
(21) Anmeldenummer: 18715575.9
(22) Anmeldetag: 27.03.2018
(51) Int. Cl.: B60G 7/00

(54) **VIERPUNKTLENKER UND VERFAHREN ZUR HERSTELLUNG EINES VIERPUNKTLENKERS**
FOUR-POINT LINK AND METHOD FOR PRODUCING A FOUR-POINT LINK
BRAS DE SUSPENSION QUATRE POINTS ET PROCÉDÉ DE FABRICATION D'UN BRAS DE SUSPENSION SUR QUATRE POINTS

(30) Priorität: 28.04.2017 DE 102017207172
(43) Veröffentlichungstag der Anmeldung: 04.03.2020
(73) Patentinhaber: ZF Friedrichshafen AG, 88046 Friedrichshafen (DE)
(72) Erfinder: MÜLLER, Ingolf, 76872 Minfeld (DE); BÜRGMANN, Manfred, 88213 Ravensburg (DE); STIEGLITZ, Andre, 49086 Osnabrück (DE); BAUER, Philipp, 88097 Eriskirch (DE)
(74) Vertreter: ZF Friedrichshafen AG
(86) Internationale Anmeldenummer: PCT/EP2018/057687
(87) Internationale Veröffentlichungsnummer: WO 2018/197130

(56) Entgegenhaltungen:
- EP-A1- 0 098 739
- DE-A1-102011 079 654
- GB-A- 2 154 520

## Beschreibung

Die vorliegende Erfindung betrifft einen Vierpunktlenker für ein Fahrzeug mit den oberbegrifflichen Merkmalen nach Anspruch 1 und ein Verfahren zur Herstellung eines Vierpunktlenkers mit den oberbegrifflichen Merkmalen nach Anspruch 8. Vierpunktlenker werden insbesondere in Nutzfahrzeugen verwendet, um eine Starrachse federbar in einem Fahrzeugrahmen zu führen. Der Vierpunktlenker ist dabei für die Querführung und die Längsführung der Achse verantwortlich. Weiterhin erfüllt der Vierpunktlenker die Funktion eines Stabilisators.

Aus dem Dokument DE 10 2011 079 654 A1 geht ein aus einem Faserkunststoffverbundmaterial ausgebildeter Vierpunktlenker entsprechend des Oberbegriffs des Anspruchs 1 hervor. Dieser Vierpunktlenker ist in Integral beziehungsweise Schalenbauweise ausgeführt. Dies macht den Vierpunktlenker sehr leicht, ist aber in Bezug auf eine großserientaugliche Fertigung von Nachteil.

Während das Dokument EP 0 098 739 A1 einen Lenker mit einer Zusatzwicklung an einem Lasteinleitelement aufzeigt, offenbart das Dokument GB 2 154 520 A einen Lenker mit einem Schaumkern und an diesem formschlüssig befestigte Lasteinleitelemente.

Bei Vierpunktlenkern aus Faserkunststoffverbundmaterial, welche mittels eines Wickelverfahrens hergestellt werden, ist eine schnelle Drehung des Bauteils erforderlich. Durch die Masse der Lasteinleitelemente und deren Abstand zu einer Drehachse treten beim Wickeln hohe Fliehkräfte auf, die während der Anfangsphase des Wickelvorgangs allein von einem Wickelkernelement abgefangen werden. Dadurch muss der Wickelprozess zu Beginn des Verfahrens mit langsamerer Geschwindigkeit ablaufen als bei einem zeitlich weiter vorangeschritten Verfahrensschritt, wenn die Lagerbuchsen bereits mehrfach mit dem Hauptlaminat umwickelt sind.

Der Erfindung liegt die Aufgabe zugrunde, einen Vierpunktlenker aus einem Faserkunststoffverbundmaterial für eine Radaufhängung eines Fahrzeugs weiterzuentwickeln, wobei die Großserientauglichkeit verbessert und die Herstellungskosten gesenkt werden sollen. Zudem soll eine sichere Fixierung der Lasteinleitelemente während des Herstellvorgangs ermöglicht werden.

Die vorliegende Erfindung schlägt ausgehend von der vorgenannten Aufgabe einen Vierpunktlenker mit den Merkmalen nach Patentanspruch 1 und ein Verfahren zur Herstellung eines Vierpunktlenkers nach Patentanspruch 8 vor. Weitere vorteilhafte Ausgestaltungen und Weiterbildungen gehen aus den Unteransprüchen hervor.

Ein Vierpunktlenker für ein Fahrzeug umfasst ein Kernelement, und ein Hauptlaminat aus einem Faserkunststoffverbundmaterial, wobei das Hauptlaminat das Kernelement umwickelt. Das Kernelement umfasst vier Lasteinleitelemente und einen Schaumkern. Die vier Lasteinleitelemente sind formschlüssig verbunden mit dem Schaumkern. Der Vierpunktlenker weist vier Zusatzwicklungen aus einem Faserkunststoffverbundmaterial auf. Eine erste Zusatzwicklung umwickelt ein erstes Lasteinleitelement und wirkverbindet dieses mit dem Hauptlaminat. Eine zweite Zusatzwicklung umwickelt ein zweites Lasteinleitelement und wirkverbindet dieses mit dem Hauptlaminat. Eine dritte Zusatzwicklung umwickelt ein drittes Lasteinleitelement und wirkverbindet dieses mit dem Hauptlaminat. Eine vierte Zusatzwicklung umwickelt ein viertes Lasteinleitelement und wirkverbindet dieses mit dem Hauptlaminat. Mittels jeder Zusatzwicklung sind Druckkräfte in das Hauptlaminat einleitbar. Das Fahrzeug ist vorzugsweise ein NKW oder PKW.

Das Hauptlaminat des Vierpunktlenkers ist aus einem Faserkunststoffverbundmaterial (FKV) ausgeformt, z. B. aus einem carbonfaserverstärkten Faserkunststoffverbundmaterial (CFK), aus einem glasfaserverstärkten Faserkunststoffverbundmaterial (GFK), aus einem aramidfaserverstärkten Faserkunststoffverbundmaterial (AFK) oder aus einem anderen geeigneten FKV. Vorzugsweise ist das Hauptlaminat aus GFK ausgeformt. Das Hauptlaminat umwickelt das Kernelement derart, dass eine Wirkverbindung zwischen dem Hauptlaminat und allen vier Lasteinleitelementen besteht.

Das Kernelement ist ausgeformt aus dem Schaumkern und aus den vier Lasteinleitelementen. Der Schaumkern dient dazu die innere Kontur des Vierpunktlenkers bereitzustellen, so dass bei einer Herstellung des Vierpunktlenkers mittels eines Wickelverfahrens die richtige Kontur des Vierpunktlenkers entsteht. Der Schaumkern ist aus einem schäumbaren Polymer ausgeformt, z. B. aus Polystyrol (PS), aus Polyurethan (PUR), aus Polymethacrylimid (PMI) oder aus einem anderen geeigneten Polymer. Hergestellt wird der Schaumkern mit Hilfe eines Formwerkzeugs, welches vorzugsweise aus Metall ausgebildet ist. Der Polymerschaum wird innerhalb des Formwerkzeuges erzeugt und nimmt die vom Formwerkzeug vorgegebene Ausformung an.

Die Lasteinleitelemente dienen bei der Verwendung des Vierpunktlenkers in einem Fahrzeug dazu, den Vierpunktlenker an einem Fahrzeugaufbau abzustützen und den Vierpunktlenker mit dem Fahrzeugaufbau wirkzuverbinden. Jedes Lasteinleitelement weist eine Aufnahme für ein Lager auf. Jede Aufnahme der Lasteinleitelemente ist geeignet je ein Lager, z. B. ein Gummi-Metall-Lager oder ein Elastomerlager (Molekularlager), aufzunehmen. Mittels dieser Aufnahme wird eine Wirkverbindung zwischen den Lasteinleitelementen und den Lagern hergestellt. Tritt bei der Verwendung des Vierpunktlenkers in einem Fahrzeug ein Lastfall ein, werden über wenigstens ein Lager Kräfte in das oder die betroffenen Lasteinleitelemente eingeleitet, die diese weiterleiten an das Hauptlaminat. Jedes Lasteinleitelement bildet somit einen Lagerbereich des Vierpunktlenkers aus und begrenzt den Vierpunktlenker zu einer Seite hin.

Die vier Lasteinleitelemente sind vorzugsweise gleichförmig ausgeformt, können aber auch voneinander verschieden ausgeformt sein. Jedes Lasteinleitelement ist ein geometrischer Extrusionskörper, der eine Mantelfläche und zwei Deckflächen aufweist, wobei jedes Lasteinleitelement vorzugsweise symmetrisch zu einer Mittelebene ausgeformt ist. Diese Mittelebene ist parallel zu den beiden Deckflächen und weist von diesen denselben Abstand auf. Jedes Lasteinleitelement weist eine spezifische Ausformung auf, die es ermöglicht, die Lasteinleitelemente in den Schaumkern zu integrieren. Jedes Lasteinleitelement kann beispielsweise im Querschnitt die Form eines Dreiecks mit aufgesetztem Kreis oder die Form eines Tropfens aufweisen. Beispielsweise kann jedes Lasteinleitelement einen Verankerungsbereich aufweisen, der von dem Schaumkern während des Herstellungsprozesses umschlossen wird. Bei der Herstellung des Kernelements werden die vier Lasteinleitelemente in das Formwerkzeug eingebracht und dort angeordnet, so dass bei dem Aufschäumen des Schaumkerns die Lasteinleitelemente in den Schaumkern integriert werden, beispielsweise mittels ihres jeweiligen Verankerungsbereichs, so dass das Kernelement ausgeformt wird. Die Aufnahme jedes Lasteinleitelements bleibt jedoch stets materialfrei. Die Lasteinleitelemente sind nicht zerstörungsfrei lösbar von dem Schaumkern. Jedes der vier Lasteinleitelemente ist daher formschlüssig verbunden mit dem Schaumkern.

Der Vierpunktlenker weist die vier Zusatzwicklungen aus FKV auf, z. B. können die Zusatzwicklungen aus GFK, CFK, AFK oder aus einem anderen geeigneten FKV ausgeformt sein. Jede Zusatzwicklung umwickelt ihr entsprechendes Lasteinleitelement und wirkverbindet dieses zusätzlich mit dem Hauptlaminat. Die Zusatzwicklungen dienen dazu, die Druckkräfte, die bei der Verwendung des Vierpunktlenkers in einem Fahrzeug bei einem Lastfall auftreten, von dem Lasteinleitelement an das Hauptlaminat weiterzuleiten.

Mittels der Wirkverbindung zwischen dem Hauptlaminat und den vier Lasteinleitelementen ist es bei der Verwendung des Vierpunktlenkers in einem Fahrzeug bei einem Lastfall möglich, auftretende Zug-Längskräfte mittels Formschluss auf das Hauptlaminat zu übertragen, auftretende Seitenkräfte mittels Schub und ggf. mittels Formschluss auf das Hauptlaminat zu übertragen, und auftretende Vertikalkräfte mittels Formschluss auf das Hauptlaminat zu übertragen. Eine Übertragung von Drucckräften, die beispielsweise bei einem Lastfall "Bremsen" auftreten, ist durch diese Wirkverbindung nicht sicher möglich. Jedoch können diese Druckkräfte mittels der Zusatzwicklungen mittels Schub und Zug-Formschluss von den jeweiligen Lasteinleitelementen an das Hauptlaminat übertragen werden.

Vorteilhaft an der Verwendung der Zusatzwicklungen ist, dass bei dem Herstellungsverfahren, bei dem das Hauptlaminat des Vierpunktlenkers mittels eines Wickelverfahrens hergestellt wird, derselbe Roboter zur Herstellung der Zusatzwicklungen eingesetzt werden kann. Weiterhin ist vorteilhaft, dass der Vierpunktlenker aus FKV eine geringere Masse aufweist als ein herkömmlicher Vierpunktlenker aus einem metallischen Material. Zudem ist das Herstellen des Vierpunktlenkers mittels Wickelverfahren kostengünstig und zeiteffizient. Sämtliche während eines Lastfalls auftretenden Kräfte können auf einfache und sichere Art und Weise in das Hauptlaminat eingeleitet und von diesem aufgenommen werden.

Nach einer Ausführungsform weist wenigstens eines der vier Lasteinleitelemente wenigstens einen Führungsvorsprung auf zur Führung der zugehörigen Zusatzwicklung. Selbstverständlich kann das wenigstens eine Lasteinleitelement zwei Führungsvorsprünge oder mehrere Führungsvorsprünge aufweisen. Außerdem kann mehr als ein Lasteinleitelement wenigstens einen Führungsvorsprung oder mehrere Führungsvorsprünge aufweisen. Ein Führungsvorsprung dient dazu, die Wickelstränge der jeweiligen Zusatzwicklung während des Herstellungsprozesses zu führen, so dass diese genau positioniert ist. Der wenigstens eine Führungsvorsprung begrenzt das Lasteinleitelement zu einer Seite hin.

Der wenigstens eine Führungsvorsprung ist an einer der Deckflächen des Lasteinleitelements angeordnet und formt dort einen radialen Vorsprung aus. Radial ist dabei ausgehend von einer eine Mittelachse der Aufnahme des Lasteinleitelements zu sehen. Weist des wenigstens eine Lasteinleitelement zwei Führungsvorsprünge auf, ist einer der Führungsvorsprünge an der einen Deckfläche und der andere der Führungsvorsprünge an der anderen Deckfläche des wenigstens einen Lasteinleitelements angeordnet. Vorzugsweise ist der wenigstens Führungsvorsprung durchgängig ausgeformt, d. h. dass er materialfreien keine Unterbrechungen aufweist. Alternativ dazu kann der wenigstens Führungsvorsprung aus mehreren Abschnitten ausgeformt sein zwischen welchen materialfreie Unterbrechungen angeordnet sind.

Nach einer weiteren Ausführungsform weist jedes der vier Lasteinleitelemente zwei Umschlingungsbereiche auf, wobei eine Wicklungslänge der jeweiligen Zusatzwicklung korrespondiert mit der Ausformung der Umschlingungsbereiche. Ein Umschlingungsbereich ist dabei derjenige Bereich eines Lasteinleitelements, der direkt von der Zusatzwicklung kontaktiert wird. Direkt heißt hierbei, dass das Kontaktieren ohne zwischengeschaltete Bauelemente erfolgt.

Jeder Umschlingungsbereich ist derart ausgeformt, dass die Zusatzwicklung diesen radial umwickelt. Vorzugsweise umwickelt die Zusatzwicklung jeden Umschlingungsbereich durchgängig. Je nach Ausformung der Umschlingungsbereiche ist die Wicklungslänge der Zusatzwicklung länger oder kürzer ausgebildet. Die Wicklungslänge der Zusatzwicklung richtet sich nach dem Umfang des Umschlingungsbereichs. Weist ein Umschlingungsbereich beispielsweise einen kreisförmigen oder ellipsoiden Querschnitt auf, richtet sich die Wicklungslänge nach dem Umfang des Kreises oder der Ellipse.

Nach einer weiteren Ausführungsform weist jedes der vier Lasteinleitelemente einen Verankerungsbereich auf, mittels welchem jedes Lasteinleitelement formschlüssig mit dem Schaumkern verbunden ist. Der Verankerungsbereich wird bei dem Herstellungsprozess des Kernelements von dem Polymerschaum des Schaumkerns umschlossen, so dass nach dem Aushärten des Schaumkerns eine formschlüssige Verbindung zwischen dem Schaumkern und den vier Lasteinleitelementen ausgebildet ist. Der Verankerungsbereich kann beispielsweise im Querschnitt dreiecksförmig ausgeformt sein, kann aber alternativ eine andere geeignete Ausformung aufweisen.

Nach einer weiteren Ausführungsform ist der Schaumkern aus einem Polymerschaum ausgeformt. Dieser Polymerschaum kann z. B. aus PU, PS oder PMI ausgeformt sein.

Nach einer weiteren Ausführungsform sind die Zusatzwicklungen aus einem GFK oder aus einem CFK ausgeformt. Vorzugsweise sind die Zusatzwicklungen aus demselben Material ausgeformt wie das Hauptlaminat.

Nach einer weiteren Ausführungsform sind die Lasteinleitelemente aus einem metallischen Material oder aus einem Faserkunststoffverbundmaterial ausgeformt. Beispielsweise können die Lasteinleitelemente aus Stahl, aus Aluminium oder aus SMC (Sheet Molding Compound) ausgeformt sein. Vorzugsweise sind die Lasteinleitelemente aus Aluminium oder aus SMC ausgeformt, so dass sie eine geringere Masse aufweisen als bei einer Ausformung aus Stahl. Die Lasteinleitelemente können in Serienfertigung im Gussverfahren, im Strangpressverfahren oder im Fräsverfahren hergestellt werden. Vorteilhaft daran ist die Modularisierbarkeit der Herstellung der Lasteinleitelemente.

Bei einem Verfahren zur Herstellung eines Vierpunktlenkers für ein Fahrzeug der bereits in der vorherigen Beschreibung beschrieben wurde, werden zuerst in einem Formwerkzeug für den Schaumkern die vier Lasteinleitelemente bereitgestellt. Der Schaumkern wird in dem Formwerkzeug hergestellt, sodass die vier Lasteinleitelemente in den Schaumkern formschlüssig integriert sind. Dabei werden die jeweiligen Verankerungsbereiche der Lasteinleitelemente von dem Polymerschaum des Schaumkerns umschlossen, wodurch der Formschluss entsteht. Durch diese formschlüssigen Verbindungen ist es möglich das anschließende Wickelverfahren von Beginn an mit hoher Geschwindigkeit durchzuführen, da die auftretenden Fliehkräfte nicht mehr nur von dem Schaumkern aufgenommen werden müssen. Die Lasteinleitelemente sind dadurch sicher mit dem Schaumkern verbunden und fixiert.

Jedes Lasteinleitelement und der Schaumkern werden einfach umwickelt mit dem Hauptlaminat, so dass eine Kraftübertragung zwischen den Lasteinleitelementen und dem Hauptlaminat ermöglicht ist. Es besteht demnach eine Wirkverbindung zwischen den Lasteinleitelementen und dem Hauptlaminat. Mittels dieser Wirkverbindung ist es bei der Verwendung des Vierpunktlenkers in einem Fahrzeug bei einem Lastfall möglich, auftretende Zug-Längskräfte mittels Formschluss, auftretende Seitenkräfte mittels Schub und ggf. mittels Formschluss, und auftretende Vertikalkräfte mittels Formschluss auf das Hauptlaminat zu übertragen.

Anschließend umwickelt die erste Zusatzwicklung das erste Lasteinleitelement, so dass eine zusätzliche Wirkverbindung mit dem Hauptlaminat entsteht. Außerdem umwickelt die zweite Zusatzwicklung das zweite Lasteinleitelement, so dass eine zusätzliche Wirkverbindung mit dem Hauptlaminat entsteht. Zudem umwickelt die dritte Zusatzwicklung das dritte Lasteinleitelement, so dass eine zusätzliche Wirkverbindung mit dem Hauptlaminat entsteht. Außerdem umwickelt die vierte Zusatzwicklung das vierte Lasteinleitelement, so dass eine zusätzliche Wirkverbindung mit dem Hauptlaminat entsteht. Die Zusatzwicklungen werden mittels desselben Roboters hergestellt, der auch das Wickelverfahren des Hauptlaminats durchführt. Mittels der Zusatzwicklungen können bei dem Lastfall zusätzlich Druckkräfte mittels Schub und Zug-Formschluss von den jeweiligen Lasteinleitelementen an das Hauptlaminat übertragen werden. Abschließend wird der fertiggestellte Vierpunktlenker ausgehärtet.

Anhand der im Folgenden erläuterten Figuren werden verschiedene Ausführungsbeispiele und Details der Erfindung näher beschrieben. Es zeigen:
- Fig. 1: eine schematische Darstellung eines Lasteinleitelements in zwei Ansichten nach einem Ausführungsbeispiel,
- Fig. 2: eine schematische Darstellung des Lasteinleitelements aus Fig. 1, das verbunden ist mit einem Hauptlaminat und einem Schaumkern nach einem Ausführungsbeispiel,
- Fig. 3: eine schematische Darstellung des Lasteinleitelements, des Hauptlaminats und des Schaumkerns aus Fig. 2, mit einer Zusatzwicklung nach einem Ausführungsbeispiel,
- Fig. 4: eine schematische Darstellung eines Lasteinleitelements in zwei Ansichten nach einem weiteren Ausführungsbeispiel,
- Fig. 5: eine schematische Darstellung des Lasteinleitelements aus Fig. 4, das verbunden ist mit einem Hauptlaminat und einem Schaumkern nach einem weiteren Ausführungsbeispiel,
- Fig. 6: eine schematische Darstellung des Lasteinleitelements, des Hauptlaminats und des Schaumkerns aus Fig. 5, mit einer Zusatzwicklung nach einem Ausführungsbeispiel,
- Fig. 7: eine schematische Darstellung eines Lasteinleitelements in zwei Ansichten nach einem weiteren Ausführungsbeispiel,
- Fig. 8: eine schematische Darstellung des Lasteinleitelements aus Fig. 7, das verbunden ist mit einem Hauptlaminat und einem Schaumkern nach einem weiteren Ausführungsbeispiel,
- Fig. 9: eine schematische Darstellung des Lasteinleitelements, des Hauptlaminats und des Schaumkerns aus Fig. 8, mit einer Zusatzwicklung nach einem Ausführungsbeispiel, und
- Fig. 10: eine schematische Darstellung eines Vierpunktlenkers nach dem Stand der Technik.

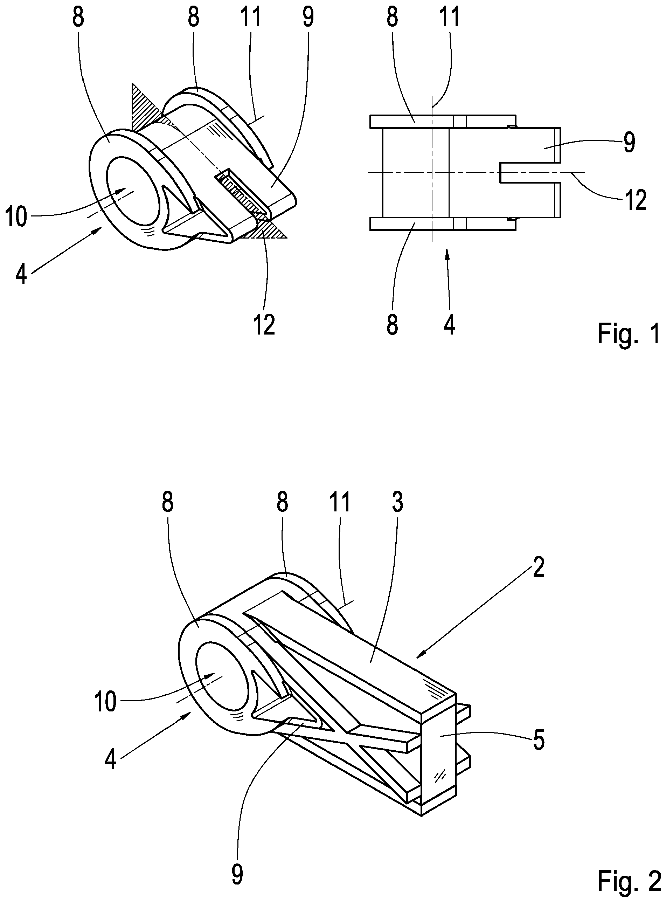

Fig. 1 zeigt eine schematische Darstellung eines Lasteinleitelements 4 in zwei Ansichten nach einem Ausführungsbeispiel. Es ist deutlich zu erkennen, dass das Lasteinleitelement 4 ein geometrischer Extrusionskörper mit zwei Deckflächen und einer Mantelfläche ist. Dieser Extrusionskörper ist symmetrisch zu einer Mittelebene 12. Die beiden Deckflächen sind von dieser Mittelebene 12 gleichweit entfernt und zu dieser parallel. Das Lasteinleitelement 4 weist eine Aufnahme 10 für ein Lager, beispielsweise für ein Elastomerlager, auf. Diese Aufnahme 10 weist eine Mittelachse 11 auf. Diese Mittelachse 11 ist senkrecht auf der Mittelebene 12.

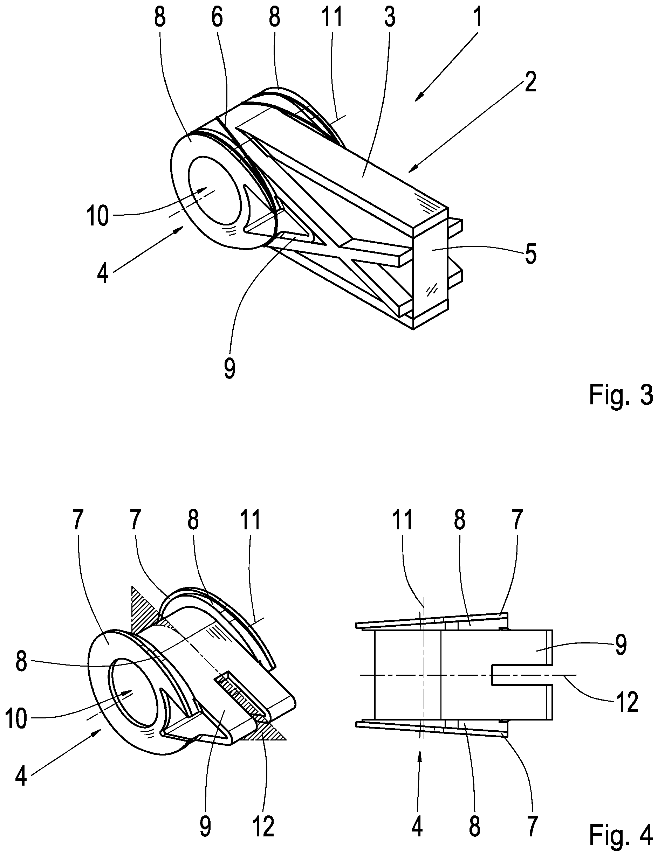

Das Lasteinleitelement 4 weist einen Verankerungsbereich 9 und zwei Umschlingungsbereiche 8 auf. Der Verankerungsbereich 9 ist im Querschnitt dreiecksförmig ausgebildet. Die Umschlingungsbereiche 8 sind im Querschnitt ellipsoid ausgebildet. Dieser Verankerungsbereich 9 wird bei einem Herstellungsverfahren für einen Vierpunktlenker von einem Polymerschaum eines Schaumkerns umschlossen. Dadurch kann eine formschlüssige Verbindung zwischen dem Lasteinleitelement 4 und dem Schaumkern geschaffen werden. Dies ist in Fig. 2 und Fig. 3 dargestellt.

Jeder Umschlingungsbereich 8 dient dazu, von einer Zusatzwicklung 6 umwickelt zu werden. Der Umfang der Umschlingungsbereiche 8 korrespondiert dabei direkt mit einer Wicklungslänge der Zusatzwicklung. Dies ist näher in Fig. 3 dargestellt. Das hier dargestellte Lasteinleitelement 4 ist aus Aluminium ausgeformt und im Strangpressverfahren hergestellt. Alternativ dazu kann das Lasteinleitelement 4 aus einem FKV ausgeformt sein. Ein Vierpunktlenker weist vier dieser Lasteinleitelemente 4 auf. Diese Lasteinleitelemente 4 des Vierpunktlenkers können alle gleichförmig ausgebildet sein.

Fig. 2 zeigt eine schematische Darstellung des Lasteinleitelements 4 aus Fig. 1, das verbunden ist mit einem Hauptlaminat 3 und einem Schaumkern 5 nach einem Ausführungsbeispiel. Es ist deutlich zu erkennen, dass das Lasteinleitelement 4 mittels seines Verankerungsbereichs 9 in den Schaumkern 5 integriert ist. Der Schaumkern 5 umschließt den Verankerungsbereich 9. Der Schaumkern 5 ist mit vier gleichartigen Lasteinleitelementen 4 formschlüssig verbunden und bildet somit das Kernelement 2 aus. Hier ist nur ein Ausschnitt des Kernelements 2 dargestellt. Der Schaumkern 5 ist aus einem Polymerschaum ausgeformt.

Das Hauptlaminat 3 umwickelt sowohl den Schaumkern 5 als auch das Lasteinleitelement 4. Die beiden Umschlingungsbereiche 8 des Lasteinleitelements 4 sind jedoch materialfrei und das Hauptlaminat 3 umwickelt diese beiden Umschlingungsbereiche 8 nicht.

Die hier dargestellte Ausführung ohne die Zusatzwicklung ist dazu in der Lage, bei einem Lastfall, wenn der Vierpunktlenker in einem Fahrzeug verwendet wird, Zug-Längskräfte über Formschluss, Seitenkräfte über Schub und gegebenenfalls über Formschluss und Vertikalkräfte über Formschluss von den Lasteinleitelementen 4 an das Hauptlaminat 3 zu übertragen.

Fig. 3 zeigt eine schematische Darstellung des Lasteinleitelements 4, des Hauptlaminats 3 und des Schaumkerns 5 aus Fig. 2 mit einer Zusatzwicklung 6 nach einem Ausführungsbeispiel. Zusätzlich zu der in Fig. 2 gezeigten Ausformung ist eine Zusatzwicklung 6 mit dem Kernelement 2 und dem Hauptlaminat 3 wirkverbunden.

Die Zusatzwicklung 6 umwickelt die beiden Umschlingungsbereiche 8 des Lasteinleitelements 4 radial. Außerdem umwickelt die Zusatzwicklung 6 das Hauptlaminat 3 in einem Teilbereich ebenfalls radial. Durch die Zusatzwicklung 6 entsteht eine zusätzliche Wirkverbindung zwischen dem Lasteinleitelement 4 und dem Hauptlaminat 3. Die Zusatzwicklung 6 umwickelt die beiden Umschlingungsbereiche 8 durchgängig, d.h. ohne Unterbrechung. Bei einem Vierpunktlenker 1, von welchem hier nur ein Ausschnitt dargestellt ist, ist jedes der vier Lasteinleitelemente 4 mit einer Zusatzwicklung 6 umwickelt. Die Wicklungslänge der Zusatzwicklung 6 richtet sich dabei nach dem Umfang der beiden Umschlingungsbereiche 8.

Durch diese Zusatzwicklung 6 können Druckkräfte, die bei einem Lastfall, z.B. bei einem Bremsfall, auftreten, sicher in das Hauptlaminat 3 mittels Schub- und Zugformschluss übertragen werden.

Vorzugsweise ist die Zusatzwicklung 6 aus demselben Material ausgeformt wie das Hauptlaminat 3. Beispielsweise kann das Hauptlaminat 3 aus GFK ausgeformt sein. Somit ist dann auch die Zusatzwicklung 6 aus GFK ausgeformt. Die Zusatzwicklung 6 wird mittels desselben Roboters hergestellt wie bereits das Hauptlaminat 3. So ist eine kostengünstige Herstellungsweise ermöglicht.

Fig. 4 zeigt eine schematische Darstellung eines Lasteinleitelements 4 in zwei Ansichten nach einem weiteren Ausführungsbeispiel. Das dargestellte Lasteinleitelement 4 ist symmetrisch zu einer Mittelebene 12. Es ist deutlich zu erkennen, dass das Lasteinleitelement 4 ein geometrischer Extrusionskörper mit zwei Deckflächen und einer Mantelfläche ist. Dieser Extrusionskörper ist symmetrisch zu dieser Mittelebene 12. Die beiden Deckflächen sind von dieser Mittelebene 12 gleichweit entfernt und zu dieser parallel. Weiterhin weist das Lasteinleitelement 4 eine Mittelachse 11 auf, die senkrecht ist zu der Mittelebene 12.

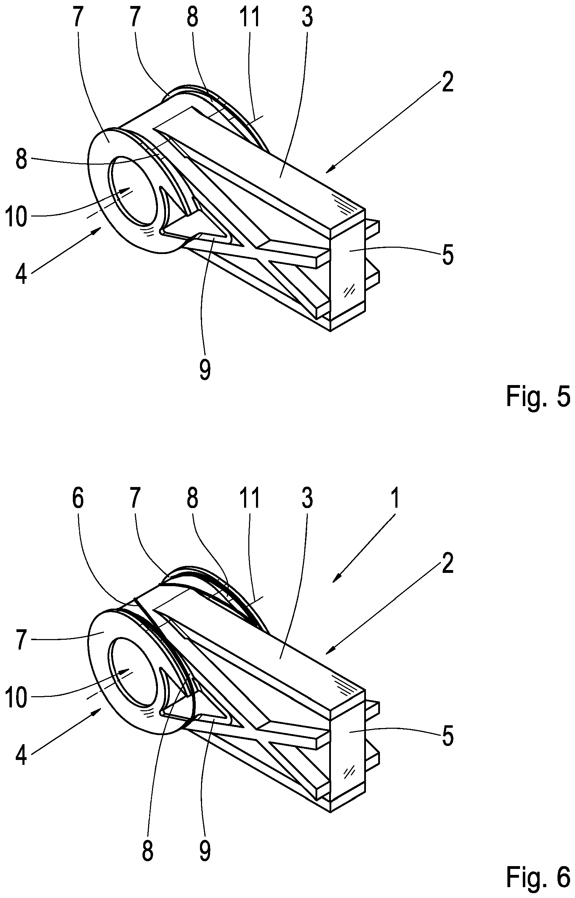

Das Lasteinleitelement 4 weist eine Aufnahme 10 für ein Lager auf. Mittels dieser Aufnahme 10 kann das Lasteinleitelement 4 mit einem Lager verbunden werden, beispielsweise mit einem Elastomerlager. Das Lasteinleitelement 4 weist zudem zwei Umschlingungsbereiche 8, einen Verankerungsbereich 9 und zwei Führungsvorsprünge 7 auf. Der Verankerungsbereich 9 dient dazu, eine formschlüssige Verbindung mit einem Schaumkern eines Vierpunktlenkers herzustellen, was in Fig. 5 und Fig. 6 gezeigt ist. Diese formschlüssige Verbindung ist dieselbe wie bereits in Fig. 2 und Fig. 3 beschrieben. Der Verankerungsbereich 9 weist einen dreiecksförmigen Querschnitt auf.

Beide Umschlingungsbereiche 8 weisen einen ellipsoiden Querschnitt auf. Mit den beiden Umschlingungsbereichen 8 sind die beiden Führungsvorsprünge 7 verbunden. Ein erster Führungsvorsprung 7 ist mit einem ersten Umschlingungsbereich 8 verbunden. Ein zweiter Führungsvorsprung 7 ist mit einem zweiten Umschlingungsbereich 8 verbunden. Der erste Führungsvorsprung 7 ist an einer ersten Deckfläche des Lasteinleitelements 4 angeordnet. Der zweite Führungsvorsprung 7 ist an einer zweiten Deckfläche des Lasteinleitelements 7 angeordnet. Die beiden Führungsvorsprünge 7 sind radial zu der Mittelachse 11 des Lasteinleitelements 4. Die beiden Führungsvorsprünge 7 dienen dazu, die Zusatzwicklung, die in Fig. 6 dargestellt ist, zu führen und zu positionieren.

Fig. 5 zeigt eine schematische Darstellung des Lasteinleitelements 4 aus Fig. 4, das verbunden ist mit einem Hauptlaminat 3 und einem Schaumkern 5 nach einem weiteren Ausführungsbeispiel. Es ist deutlich zu erkennen, dass das Lasteinleitelement 4 mittels seines Verankerungsbereichs 9 in den Schaumkern 5 integriert ist. Das Lasteinleitelement 4 ist formschlüssig verbunden mit dem Schaumkern 5. Der Schaumkern 5 umschließt den Verankerungsbereich 9. Der Schaumkern 5 ist aus einem Polymerschaum ausgeformt. Der Schaumkern 5 ist mit vier gleichartigen Lasteinleitelementen 4 formschlüssig verbunden und bildet somit das Kernelement 2 aus. Hier ist nur ein Ausschnitt des Kernelements 2 dargestellt. Das Kernelement 2 und somit das Lasteinleitelement 4 und der Schaumkern 5 sind in einem Teilbereich umwickelt von dem Hauptlaminat 3. Das Hauptlaminat 3 umwickelt nicht die Umschlingungsbereiche 8 und die Führungsvorsprünge 7 des Lasteinleitelements 4. Diese sind noch materialfrei.

Vorzugsweise ist das Lasteinleitelement aus Aluminium oder aus FKV ausgeformt. Das Hauptlaminat 3 ist aus FKV ausgeformt, vorzugsweise aus GFK.

Die hier dargestellte Ausführung ohne die Zusatzwicklung ist dazu in der Lage, bei einem Lastfall, wenn der Vierpunktlenker in einem Fahrzeug verwendet wird, Zug-Längskräfte über Formschluss, Seitenkräfte über Schub und gegebenenfalls über Formschluss und Vertikalkräfte über Formschluss von den Lasteinleitelementen 4 an das Hauptlaminat 3 zu übertragen.

Fig. 6 zeigt eine schematische Darstellung des Lasteinleitelements 4, des Hauptlaminats 3 und des Schaumkerns 5 aus Fig. 5 mit einer Zusatzwicklung 6 nach einem Ausführungsbeispiel. Hier dargestellt ist ein Ausschnitt aus dem Vierpunktlenker 1, der vier Lasteinleitelemente 4 aufweist. Zusätzlich zu der Ausführung in Fig. 5 ist hier eine Zusatzwicklung 6 sowohl um das Lasteinleitelement 4 als auch um das Hauptlaminat 3 gewickelt.

Die Zusatzwicklung 6 umwickelt die beiden Umschlingungsbereiche 8 des Lasteinleitelements 4 radial. Außerdem umwickelt die Zusatzwicklung 6 das Hauptlaminat 3 in einem Teilbereich ebenfalls radial. Durch die Zusatzwicklung 6 entsteht eine zusätzliche Wirkverbindung zwischen dem Lasteinleitelement 4 und dem Hauptlaminat 3. Die Zusatzwicklung 6 umwickelt die beiden Umschlingungsbereiche 8 durchgängig, d.h. ohne Unterbrechung. Die beiden Führungsvorsprünge 7 dienen dabei dazu, die Zusatzwicklung 6 genau an den Umschlingungsbereichen 8 zu positionieren, so dass ein Verrutschen der Zusatzwicklung 6 nicht möglich ist. Bei einem Vierpunktlenker 1, von welchem hier nur ein Ausschnitt dargestellt ist, ist jedes der vier Lasteinleitelemente 4 mit einer Zusatzwicklung 6 umwickelt. Die Wicklungslänge der Zusatzwicklung 6 richtet sich dabei nach dem Umfang der beiden Umschlingungsbereiche 8.

Durch die Zusatzwicklung 6 ist eine zusätzliche Wirkverbindung zwischen dem Lasteinleitelement 4 und dem Hauptlaminat 3 ausgebildet. Bei dem in Fig. 5 beschriebenen Lastfall, der beispielsweise durch ein Bremsen hervorgerufen wird, können Druckkräfte durch die Zusatzwicklung 6 durch Schub- und Zugformschluss von dem Lasteinleitelement 4 in das Hauptlaminat 3 übertragen werden.

Die Zusatzwicklung 6 ist vorzugsweise aus demselben Material ausgeformt wie das Hauptlaminat 3, beispielsweise aus GFK oder CFK. Das Lasteinleitelement 4 ist vorzugsweise mittels Strangpressverfahren hergestellt. Die Zusatzwicklung 6 wird mittels desselben Roboters hergestellt wie bereits die Wicklungen des Hauptlaminats 3. Dadurch ist eine kostengünstige Herstellung möglich.

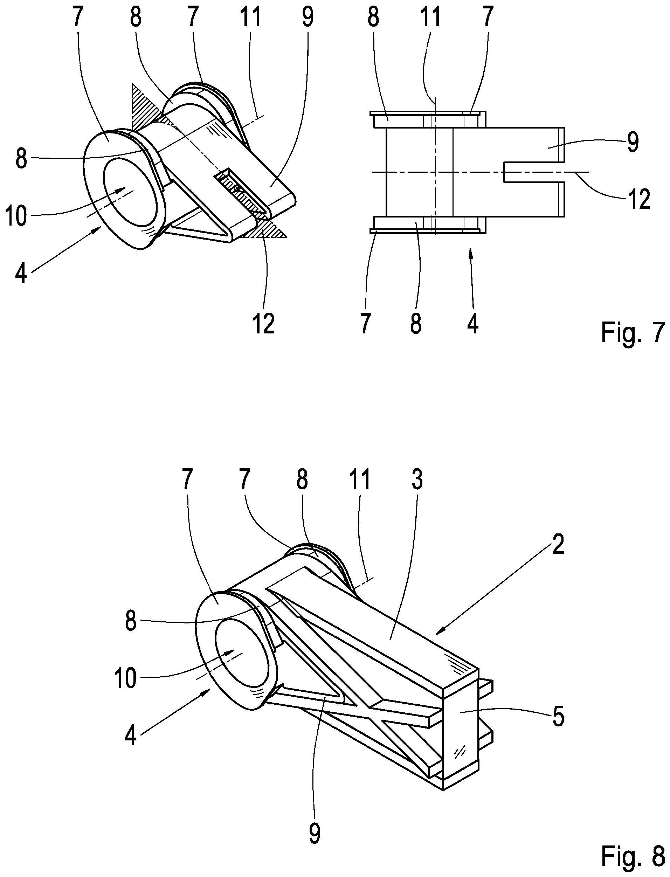

Fig. 7 zeigt eine schematische Darstellung eines Lasteinleitelements 4 in zwei Ansichten nach einem weiteren Ausführungsbeispiel. Das dargestellte Lasteinleitelement 4 ist symmetrisch zu einer Mittelebene 12. Es ist deutlich zu erkennen, dass das Lasteinleitelement 4 ein geometrischer Extrusionskörper mit zwei Deckflächen und einer Mantelfläche ist. Dieser Extrusionskörper ist symmetrisch zu dieser Mittelebene 12. Die beiden Deckflächen sind von dieser Mittelebene 12 gleichweit entfernt und zu dieser parallel. Weiterhin weist das Lasteinleitelement 4 eine Mittelachse 11 auf, die senkrecht ist zu der Mittelebene 12.

Das Lasteinleitelement 4 weist eine Aufnahme 10 für ein Lager auf, beispielsweise für ein Elastomerlager. Die Aufnahme 10 ist zylinderförmig ausgeformt und weist eine Mittelachse 11 auf. Diese Mittelachse 11 ist senkrecht zu der Mittelebene 12.

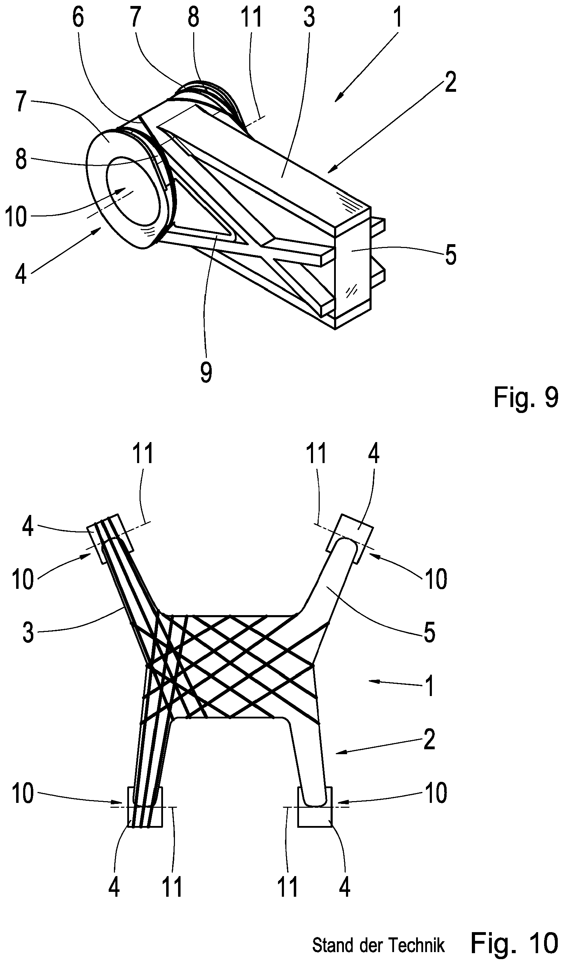

Das Lasteinleitelement 4 weist einen Verankerungsbereich 9, zwei Umschlingungsbereiche 8 und zwei Führungsvorsprünge 7 auf. Der Verankerungsbereich 9 weist eine dreiecksförmige Querschnitt auf. Der Verankerungsbereich 9 dient dazu, eine formschlüssige Verbindung zwischen dem Lasteinleitelement 4 und einem Schaumkern herzustellen, was in Fig. 8 und Fig. 9 dargestellt ist. Diese formschlüssige Verbindung ist dieselbe wie bereits in Fig. 2 und Fig. 3 sowie in Fig. 5 und Fig. 6 dargestellt.

Die beiden Umschlingungsbereiche 8 weisen eine elliptische Querschnittsfläche auf. Ein erster Führungsvorsprung 7 ist mit einem ersten Umschlingungsbereich 8 verbunden. Ein zweiter Führungsvorsprung 7 ist mit einem zweiten Umschlingungsbereich 8 verbunden. Der erste Führungsvorsprung 7 ist an der ersten Deckfläche angeordnet, der zweite Führungsvorsprung 7 ist an der zweiten Deckfläche angeordnet. Die beiden Führungsvorsprünge 7 dienen dazu, eine Zusatzwicklung, die in Fig. 9 dargestellt ist, zu führen und zu positionieren. Die beiden Umschlingungsbereiche 8 dienen dazu, von der Zusatzwicklung 6 umwickelt zu werden. Das hier dargestellte Lasteinleitelement ist vorzugsweise im Strangpressverfahren aus Aluminium oder aus einem FKV hergestellt.

Fig. 8 zeigt eine schematische Darstellung des Lasteinleitelements 4 aus Fig. 7, das verbunden ist mit einem Hauptlaminat 3 und einem Schaumkern 5 nach einem weiteren Ausführungsbeispiel. Es ist deutlich zu erkennen, dass das Lasteinleitelement 4 mittels seines Verankerungsbereichs 9 in den Schaumkern 5 integriert ist. Das Lasteinleitelement 4 ist formschlüssig verbunden mit dem Schaumkern 5. Der Schaumkern 5 umschließt den Verankerungsbereich 9. Der Schaumkern 5 ist aus einem Polymerschaum ausgeformt. Der Schaumkern 5 ist mit vier gleichartigen Lasteinleitelementen 4 formschlüssig verbunden und bildet somit das Kernelement 2 aus. Hier ist nur ein Ausschnitt des Kernelements 2 dargestellt.

Das Kernelement 2 und somit das Lasteinleitelement 4 und der Schaumkern 5 sind in einem Teilbereich umwickelt von dem Hauptlaminat 3. Das Hauptlaminat 3 umwickelt nicht die Umschlingungsbereiche 8 und die Führungsvorsprünge 7 des Lasteinleitelements 4. Diese sind noch materialfrei. Vorzugsweise ist das Hauptlaminat 3 aus einem FKV, beispielsweise aus GFK oder CFK, ausgeformt.

Die hier dargestellte Ausführung ohne die Zusatzwicklung ist dazu in der Lage, bei einem Lastfall, wenn der Vierpunktlenker in einem Fahrzeug verwendet wird, Zug-Längskräfte über Formschluss, Seitenkräfte über Schub und gegebenenfalls über Formschluss und Vertikalkräfte über Formschluss von den Lasteinleitelementen 4 an das Hauptlaminat 3 zu übertragen

Fig. 9 zeigt eine schematische Darstellung des Lasteinleitelements 4, des Hauptlaminats 3 und des Schaumkerns 5 aus Fig. 8 mit einer Zusatzwicklung 6 nach einem Ausführungsbeispiel. Zusätzlich zu der in Fig. 8 dargestellten Ausführung ist hier die Zusatzwicklung 6 dargestellt. Die Zusatzwicklung 6 ist vorzugsweise aus demselben Material ausgeformt wie das Hauptlaminat 3, beispielsweise aus GFK.

Die Zusatzwicklung 6 umwickelt die beiden Umschlingungsbereiche 8 des Lasteinleitelements 4 radial. Außerdem umwickelt die Zusatzwicklung 6 das Hauptlaminat 3 in einem Teilbereich ebenfalls radial. Durch die Zusatzwicklung 6 entsteht eine zusätzliche Wirkverbindung zwischen dem Lasteinleitelement 4 und dem Hauptlaminat 3. Die Zusatzwicklung 6 umwickelt die beiden Umschlingungsbereiche 8 durchgängig, d.h. ohne Unterbrechung. Die beiden Führungsvorsprünge 7 dienen dabei dazu, die Zusatzwicklung 6 genau an den Umschlingungsbereichen 8 zu positionieren, so dass ein Verrutschen der Zusatzwicklung 6 nicht möglich ist. Bei einem Vierpunktlenker 1, von welchem hier nur ein Ausschnitt dargestellt ist, ist jedes der vier Lasteinleitelemente 4 mit einer Zusatzwicklung 6 umwickelt. Die Wicklungslänge der Zusatzwicklung 6 richtet sich dabei nach dem Umfang der beiden Umschlingungsbereiche 8. Die hier dargestellte Wicklungslänge der Zusatzwicklung 6 ist deutlich geringer als die Wicklungslänge der Zusatzwicklung, die in Fig. 6 oder in Fig. 3 dargestellt ist.

Durch die Zusatzwicklung 6 ist eine zusätzliche Wirkverbindung zwischen dem Lasteinleitelement 4 und dem Hauptlaminat 3 ausgebildet. Bei dem in Fig. 8 beschriebenen Lastfall, der beispielsweise durch ein Bremsen hervorgerufen wird, können Druckkräfte durch die Zusatzwicklung 6 durch Schub- und Zugformschluss von dem Lasteinleitelement 4 in das Hauptlaminat 3 übertragen werden. Die Zusatzwicklung 6 wird mittels desselben Roboters hergestellt wie bereits die Wicklungen des Hauptlaminats 3. Dadurch ist eine kostengünstige Herstellung möglich.

Fig. 10 zeigt eine schematische Darstellung eines Vierpunktlenkers 1 nach dem Stand der Technik. Der hier dargestellte Vierpunktlenker 1 dient lediglich der Übersicht. Deutlich zu erkennen ist, dass der Vierpunktlenker 1 vier Lasteinleitelemente 4 aufweist, die jeweils eine Aufnahme 10 für ein Lager, beispielsweise für ein Elastomerlager, aufweisen. Jede Aufnahme 10 weist eine Mittelachse 11 auf. Hier dargestellt ist das Hauptlaminat 3, das sowohl den Schaumkern 5 als auch die vier Lasteinleitelemente 4 umwickelt. Der hier dargestellte Vierpunktlenker 1 weist keine Zusatzwicklung auf. Somit kann der hier dargestellte Vierpunktlenker 1 in einem Lastfall nur Zuglängskräfte über Formschluss, Seitenkräfte über Schub und gegebenenfalls über Formschluss und Vertikalkräfte über Formschluss von den Lasteinleitelementen 4 an das Hauptlaminat 3 übertragen. Druckkräfte lassen sich durch dieses Konstruktionsprinzip jedoch nicht sicher abfangen und in das Hauptlaminat 3 übertragen. So kann eine sichere Reaktion auf einen Lastfall nicht gewährleistet werden.

Die hier dargestellten Ausführungsbeispiele sind nur beispielhaft gewählt. Beispielsweise kann das Lasteinleitelement bzw. die Lasteinleitelemente eine andere als die hier dargestellte Ausformung aufweisen. Beispielsweise kann der Verankerungsbereich eine noch speziellere Form aufweisen, so dass der Formschluss zwischen dem Schaumkern und den Lasteinleitelementen verbessert ist.

### Bezugszeichen

- 1: Vierpunktlenker
- 2: Kernelement
- 3: Hauptlaminat
- 4: Lasteinleitelement
- 5: Schaumkern
- 6: Zusatzwicklung
- 7: Führungsvorsprung
- 8: Umschlingungsbereich
- 9: Verankerungsbereich
- 10: Aufnahme
- 11: Mittelachse
- 12: Mittelebene

## Patentansprüche

1. Vierpunktlenker (1) für ein Fahrzeug, umfassend ein Kernelement (2), und ein Hauptlaminat (3) aus einem Faserkunststoffverbundmaterial, wobei
- das Hauptlaminat (3) das Kernelement (2) umwickelt,
- das Kernelement (2) vier Lasteinleitelemente (4) und einen Schaumkern (5) umfasst,
- die vier Lasteinleitelemente (4) formschlüssig verbunden sind mit dem Schaumkern (5),
**dadurch gekennzeichnet, dass** der Vierpunktlenker (1) vier Zusatzwicklungen (6) aus einem Faserkunststoffverbundmaterial aufweist, wobei
- eine erste Zusatzwicklung (6) ein erstes Lasteinleitelement (4) umwickelt und mit dem Hauptlaminat (3) wirkverbindet,
- eine zweite Zusatzwicklung (6) ein zweites Lasteinleitelement (4) umwickelt und mit dem Hauptlaminat (3) wirkverbindet,
- eine dritte Zusatzwicklung (6) ein drittes Lasteinleitelement (4) umwickelt und mit dem Hauptlaminat (3) wirkverbindet,
- eine vierte Zusatzwicklung (6) ein viertes Lasteinleitelement (4) umwickelt und mit dem Hauptlaminat (3) wirkverbindet,
und wobei mittels jeder Zusatzwicklung (6) Druckkräfte in das Hauptlaminat (3) einleitbar sind.

2. Vierpunktlenker (1) nach Anspruch 1, **dadurch gekennzeichnet, dass** wenigstens eines der vier Lasteinleitelemente (4) wenigstens einen Führungsvorsprung (7) aufweist zur Führung der zugehörigen Zusatzwicklung (6).

3. Vierpunktlenker (1) nach einem der vorherigen Ansprüche, **dadurch gekennzeichnet, dass** jedes der vier Lasteinleitelemente (4) zwei Umschlingungsbereiche (8) aufweist, wobei eine Wicklungslänge der jeweiligen Zusatzwicklung (6) korrespondiert mit der Ausformung der Umschlingungsbereiche (8).

4. Vierpunktlenker (1) nach einem der vorherigen Ansprüche, **dadurch gekennzeichnet, dass** jedes der vier Lasteinleitelemente (4) einen Verankerungsbereich (9) aufweist, mittels welchem jedes Lasteinleitelement (4) formschlüssig mit dem Schaumkern (5) verbunden ist.

5. Vierpunktlenker (1) nach einem der vorherigen Ansprüche, **dadurch gekennzeichnet, dass** der Schaumkern (5) aus einem Polymerschaum ausgeformt ist.

6. Vierpunktlenker (1) nach einem der vorherigen Ansprüche, **dadurch gekennzeichnet, dass** die Zusatzwicklungen (6) aus einem glasfaserverstärkten Faserkunststoffverbundmaterial oder aus einem carbonfaserverstärkten Faserkunststoffverbundmaterial ausgeformt sind.

7. Vierpunktlenker (1) nach einem der vorherigen Ansprüche, **dadurch gekennzeichnet, dass** die Lasteinleitelemente (4) aus einem metallischen Material oder aus einem Faserkunststoffverbundmaterial ausgeformt sind.

8. Verfahren zur Herstellung eines Vierpunktlenkers (1) für ein Fahrzeug nach einem der vorherigen Ansprüche, **dadurch gekennzeichnet, dass**
- in einem Formwerkzeug für den Schaumkern (5) die vier Lasteinleitelemente (4) bereitgestellt werden,
- der Schaumkern (5) in dem Formwerkzeug hergestellt wird, sodass die vier Lasteinleitelemente (4) in den Schaumkern (5) formschlüssig integriert sind,
- jedes Lasteinleitelement (4) und der Schaumkern (5) einfach umwickelt werden mit dem Hauptlaminat (3), so dass eine Kraftübertragung zwischen den Lasteinleitelementen (4) und dem Hauptlaminat (3) ermöglicht ist,
- die erste Zusatzwicklung (6) das erste Lasteinleitelement (4) umwickelt, so dass eine zusätzliche Wirkverbindung mit dem Hauptlaminat (3) entsteht,
- die zweite Zusatzwicklung (6) das zweite Lasteinleitelement (4) umwickelt, so dass eine zusätzliche Wirkverbindung mit dem Hauptlaminat (3) entsteht,
- die dritte Zusatzwicklung (6) das dritte Lasteinleitelement (4) umwickelt, so dass eine zusätzliche Wirkverbindung mit dem Hauptlaminat (3) entsteht,
- die vierte Zusatzwicklung (6) das vierte Lasteinleitelement (4) umwickelt, so dass eine zusätzliche Wirkverbindung mit dem Hauptlaminat (3) entsteht,
- der Vierpunktlenker (1) ausgehärtet wird.

## Claims

1. Four-point link (1) for a vehicle, comprising a core element (2) and a main laminate (3) which is composed of a fibre/plastic composite material, wherein
- the main laminate (3) winds around the core element (2),
- the core element (2) comprises four load introducing elements (4) and a foam core (5),
- the four load introducing elements (4) are connected in a form-fitting manner to the foam core (5), **characterized in that** the four-point link (1) has four additional windings (6) composed of a fibre/plastic composite material, wherein
- a first additional winding (6) winds around a first load introducing element (4) and operatively connects said first load introducing element to the main laminate (3),
- a second additional winding (6) winds around a second load introducing element (4) and operatively connects said second load introducing element to the main laminate (3),
- a third additional winding (6) winds around a third load introducing element (4) and operatively connects said third load introducing element to the main laminate (3),
- a fourth additional winding (6) winds around a fourth load introducing element (4) and operatively connects said fourth load introducing element to the main laminate (3),
and wherein compressive forces can be introduced into the main laminate (3) by means of each additional winding (6) .

2. Four-point link (1) according to Claim 1, **characterized in that** at least one of the four load introducing elements (4) has at least one guide projection (7) for guiding the associated additional winding (6).

3. Four-point link (1) according to either of the preceding claims, **characterized in that** each of the four load introducing elements (4) has two wrap regions (8), wherein a winding length of the respective additional winding (6) corresponds to the shape of the wrap regions (8) .

4. Four-point link (1) according to one of the preceding claims, **characterized in that** each of the four load introducing elements (4) has an anchoring region (9), by means of which each load introducing element (4) is connected in a form-fitting manner to the foam core (5).

5. Four-point link (1) according to one of the preceding claims, **characterized in that** the foam core (5) is shaped from a polymer foam.

6. Four-point link (1) according to one of the preceding claims, **characterized in that** the additional windings (6) are shaped from a glass fibre-reinforced fibre/plastic composite material or from a carbon fibre-reinforced fibre/plastic composite material.

7. Four-point link (1) according to one of the preceding claims, **characterized in that** the load introducing elements (4) are shaped from a metallic material or from a fibre/plastic composite material.

8. Method for producing a four-point link (1) for a vehicle according to one of the preceding claims, **characterized in that**
- the four load introducing elements (4) are provided in a moulding tool for the foam core (5),
- the foam core (5) is produced in the moulding tool such that the four load introducing elements (4) are integrated in a form-fitting manner into the foam core (5),
- the main laminate (3) is singly wound around each load introducing element (4) and the foam core (5), such that a transmission of force between the load introducing elements (4) and the main laminate (3) is made possible,
- the first additional winding (6) winds around the first load introducing element (4) such that an additional operative connection with the main laminate (3) is produced,
- the second additional winding (6) winds around the second load introducing element (4) such that an additional operative connection with the main laminate (3) is produced,
- the third additional winding (6) winds around the third load introducing element (4) such that an additional operative connection with the main laminate (3) is produced,
- the fourth additional winding (6) winds around the fourth load introducing element (4) such that an additional operative connection with the main laminate (3) is produced,
- the four-point link (1) is hardened.

## Revendications

1. Bras de suspension à quatre points (1) destiné à un véhicule et comprenant un élément central (2) et un stratifié principal (3) en matériau composite formé de matière synthétique et de fibres,
- le stratifié principal (3) étant enroulé autour de l'élément central (2),
- l'élément central (2) comprenant quatre éléments d'introduction de charge (4) et un noyau en mousse (5),
- les quatre éléments d'introduction de charge (4) étant reliés par complémentarité de formes au noyau en mousse (5),
**caractérisé en ce que** le bras de suspension à quatre points (1) comporte quatre enroulements supplémentaires (6) en matériau composite formé de matière synthétique et de fibres,
- un premier enroulement supplémentaire (6) étant enroulé autour d'un premier élément d'introduction de charge (4) et étant relié fonctionnellement au stratifié principal (3),
- un deuxième enroulement supplémentaire (6) étant enroulé autour d'un deuxième élément d'introduction de charge (4) et étant relié fonctionnellement au stratifié principal (3),
- un troisième enroulement supplémentaire (6) étant enroulé autour d'un troisième élément d'introduction de charge (4) et étant relié fonctionnellement au stratifié principal (3),
- un quatrième enroulement supplémentaire (6) étant enroulé autour d'un quatrième élément d'introduction de charge (4) et étant relié fonctionnellement au stratifié principal (3),
et des forces de compression pouvant être introduites dans le stratifié principal (3) au moyen de chaque enroulement supplémentaire (6).

2. Bras de suspension à quatre points (1) selon la revendication 1, **caractérisé en ce que** l'un au moins des quatre éléments d'introduction de charge (4) comporte au moins une saillie de guidage (7) destinée à guider l'enroulement supplémentaire associé (6).

3. Bras de suspension à quatre points (1) selon l'une des revendications précédentes, **caractérisé en ce que** chacun des quatre éléments d'introduction de charge (4) comporte deux zones d'enroulement (8), une longueur d'enroulement de l'enroulement supplémentaire respectif (6) correspondant à la forme des zones d'enroulement (8) .

4. Bras de suspension à quatre points (1) selon l'une des revendications précédentes, **caractérisé en ce que** chacun des quatre éléments d'introduction de charge (4) comporte une zone d'ancrage (9) au moyen de laquelle chaque élément d'introduction de charge (4) est relié par complémentarité de formes au noyau en mousse (5).

5. Bras de suspension à quatre points (1) selon l'une des revendications précédentes, **caractérisé en ce que** le noyau en mousse (5) est formé à partir d'une mousse polymère.

6. Bras de suspension à quatre points (1) selon l'une des revendications précédentes, **caractérisé en ce que** les enroulements supplémentaires (6) sont en matériau composite formé de matière synthétique et de fibres renforcé de fibres de verre ou en matériau composite formé de matière synthétique et de fibres renforcé de fibres de carbone.

7. Bras de suspension à quatre points (1) selon l'une des revendications précédentes, **caractérisé en ce que** les éléments d'introduction de charge (4) sont formés à partir d'un matériau métallique ou d'un matériau composite formé de matière synthétique et de fibres.

8. Procédé de fabrication d'un bras de suspension à quatre points (1) destiné à un véhicule selon l'une des revendications précédentes, **caractérisé en ce que**
- les quatre éléments d'introduction de charge (4) sont placés dans un moule destiné au noyau en mousse (5),
- le noyau en mousse (5) est fabriqué dans le moule de sorte que les quatre éléments d'introduction de charge (4) sont intégrés dans le noyau en mousse (5) par complémentarité de formes,
- chaque élément d'introduction de charge (4) et le noyau en mousse (5) sont entourés une seule fois avec le stratifié principal (3) de façon à permettre une transmission de force entre les éléments d'introduction de charge (4) et le stratifié principal (3),
- le premier enroulement supplémentaire (6) est enroulé autour du premier élément d'introduction de charge (4) de façon à réaliser une liaison fonctionnelle supplémentaire avec le stratifié principal (3),
- le deuxième enroulement supplémentaire (6) est enroulé autour du deuxième élément d'introduction de charge (4) de façon à réaliser une liaison fonctionnelle supplémentaire avec le stratifié principal (3),
- le troisième enroulement supplémentaire (6) est enroulé autour du troisième élément d'introduction de charge (4), de façon à réaliser une liaison fonctionnelle supplémentaire avec le stratifié principal (3),
- le quatrième enroulement supplémentaire (6) est enroulé autour du quatrième élément d'introduction de charge (4) de façon à réaliser une liaison fonctionnelle supplémentaire avec le stratifié principal (3),
- le bras de suspension à quatre points (1) est durci.
